# EUROPEAN PATENT SPECIFICATION

(11) **EP 3 663 214 B1**
(45) Date of publication and mention of the grant of the patent: **16.06.2021**
(21) Application number: 19182570.2
(22) Date of filing: 26.06.2019
(51) Int. Cl.: B65B 41/16, B65B 9/04, B65B 47/02, B65B 47/10, B65B 57/08, B65B 61/06, B65B 61/10, B65B 65/00, B65B 3/02, B65B 11/52, B65B 11/50, B65B 51/10, B65G 21/20

(54) **A FILM FEEDING SYSTEM FOR A CONVEYOR OF A PACKAGING MACHINE, A CONVEYOR AND A PACKAGING MACHINE EQUIPPED WITH SUCH A SYSTEM**
FOLIENZUFÜHRSYSTEM FÜR EINEN FÖRDERER EINER PRODUKTVERPACKUNGSMASCHINE, FÖRDERER UND MIT SOLCH EINEM SYSTEM AUSGESTATTETE PRODUKTVERPACKUNGSMASCHINE
SYSTÈME D'ALIMENTATION EN FILM POUR UN CONVOYEUR D'UNE MACHINE D'EMBALLAGE, CONVOYEUR ET MACHINE D'EMBALLAGE ÉQUIPÉE D'UN TEL SYSTÈME

(30) Priority: 07.12.2018 PL 42810118
(43) Date of publication of application: 10.06.2020
(73) Proprietor: Gasiorowski, Marek, 05-503 Glosków (PL)
(72) Inventor: Gasiorowski, Marek, 05-503 Glosków (PL)
(74) Representative: Karcz, Katarzyna

(56) References cited:
- EP-A1- 2 933 194
- WO-A1-2014/147499
- DE-A1-102005 048 491
- US-A1- 2010 287 882
- US-B1- 6 282 866

## Description

The invention relates to a film feeding system for a conveyor of a packaging machine as well as to a conveyor and a machine equipped with such system. The invention may be applied in a machine with an intermittent motion conveyor for enclosing products in the packaging consisting of an upper part and a lower part, the lower part having a form of a thermoformed container and the upper part being a flat film.

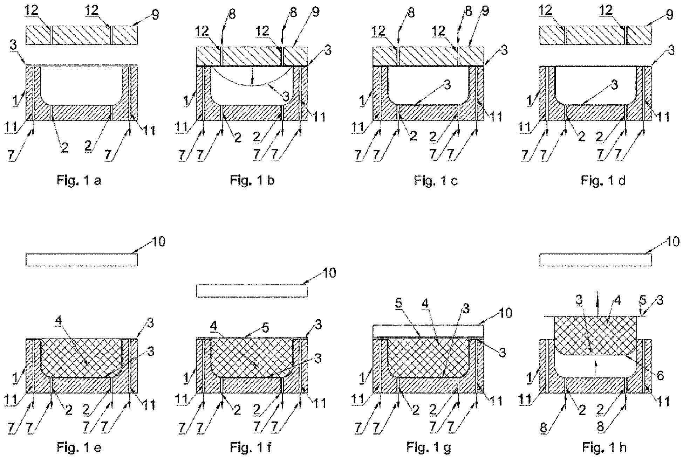

Machines for packaging products in a film are typically packaging machines in which two or more film layers (films) are thermoformed. The most popular are the machines operating with two films, i.e. an upper film and a lower film. Figures 1a-1h schematically illustrate this process realized in conventional machines. In figs. 1a-1h, one exemplary cavity 1 of a mold and selected fragments of a thermoforming tool 9 and a sealing tool 10 are shown. Fig. 1a shows the empty cavity 1, containing no substance to be packed. The lower film 3 is applied to the mold and sucked into it by vacuum 7 through lateral channels 11. The thermoforming tool 9 located above the mold is equipped with channels 12. The thermoforming process is initiated by lowering the heated tool 9 onto the mold and pressing the film against the tool 9 in order to heat the film up. To assist this process, compressed air is delivered through internal channels 2 for a short time, pressing the lower film 3 against the tool 9. Afterwards, as presented in fig. 1b, vacuum 7 is supplied to the internal channels 2, which results in forming the lower film 3. During the forming, air is supplied via the channels 12 of the tool 9. In order to assist the thermoforming, in some applications, as illustrated by fig. 1b, compressed air 8 is supplied through the channels 12 of the tool 9. Fig. 1c illustrates a final stage of the thermoforming process. The lower film 3 adheres to the cavity 1 over its entire surface. In fig. 1d, the tool 9 is raised again, and the cavity 1 is ready to be filled with the substance 4 to be packed. Fig. 1e presents the cavity 1 filled with the substance 4. The sealing process is shown in figs. 1f - 1h. Fig. 1f presents the situation, in which the upper film 5 has been applied to the mold, and the sealing tool 10 is located above the mold. Fig. 1g shows the process of sealing the lower film 3 with the upper film 5. The heated tool 10 presses both films to seal them together. Due to the natural tendency of the film to return to its original shape, the lower film 3 must be pressed by vacuum 7 to the walls of the cavity 1 throughout the entire process of creation of a final product 6, that is during the thermoforming - figs.1b - 1d, the filling of the mold 1 with the substance 4 - fig. 1e - the application of the upper film 5, the sealing of the upper film 5 with the lower film 3 and the cutting of individual products 6, the result of which is shown in figs. 1f and 1g. After the process has been completed, it is necessary to disconnect vacuum 7 from the cavities 1 and to supply the compressed air 8 from their bottom side in order to remove the individual products 6 from the mold 1, as illustrated in fig. 1h.

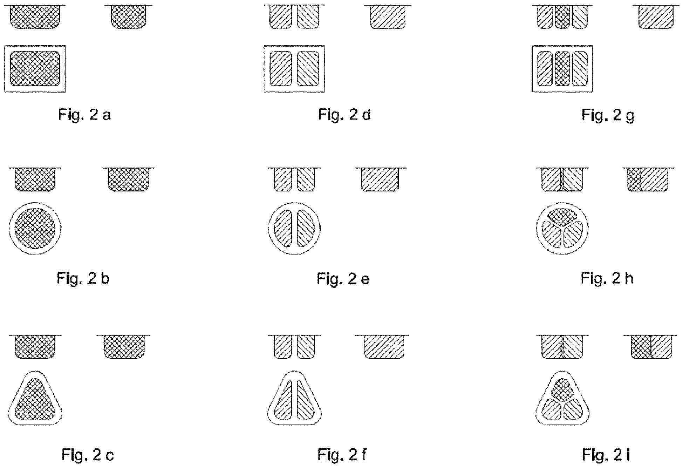

The process described above enables obtaining products of various shapes, containing various numbers of chambers and different substances. Figs. 2a - 2i present exemplary products of various shapes and various quantities of components, constituting a single product. Figs. 2a, 2b and 2c present products of various shapes containing a single substance enclosed in two films - the upper and the lower film - sealed together along the edges. Figs. 2d - 2f present products of various shapes containing two substances, packed in two films sealed together along the edges. Figs.2g - 2i present products of various shapes containing three substances, packed in two films sealed together along the edges. A single product may contain a number of substances greater than the one, two or three components options being presented in figs. 2a - 2i. At present, the three-component option is the most popular solution.

The technology described herein is used for packaging of household and industrial chemistry products, cosmetics, food and pharmaceutical products, thus it may be applied to a broad range of products and films; in particular, it is useful for packaging small products consisting of one or several chemically active substances packed in a water-soluble film adapted to be dissolved in water. At present, the main group of these products are dishwasher and laundry detergent capsules. Packaging of these substances in a water-soluble film is very advantageous as the product can be used without unpacking. The film is dissolved completely along with the substances it contains, leaving no waste. The substances packaged in a film constitute the final product, which can come in various shapes and colors, featuring attractive designs. The products illustrated in the exemplary figs. 2a - 2i are produced in the machines equipped with several hundred to several thousand single cavities 1. Most often, the cavities are embedded in interconnected modules forming an endless loop of a modular conveyor.

Conventionally, two types of modular conveyors are used in the thermoforming and packaging machines.

The modular conveyor of the first type operates continuously without stopping and all the process operations in the individual conveyor modules are performed on the fly. Such machines and modular conveyors are known as continuous motion machines and conveyors.

The modular conveyor of the second type operates intermittently, stopping in subsequent preset positions. During the stoppage of the conveyor, the modules in which a process operation is being performed are located precisely under the working stations performing the respective process operations. Then the conveyor moves on and stops again after passing a distance equal to the length of one module or its multiple. Then the cycle of the process operations is repeated. Usually, each module stops several times under different working stations performing individual operations necessary to complete a full production cycle. Such machines and the associated modular conveyors are known as intermittent motion machines and conveyors.

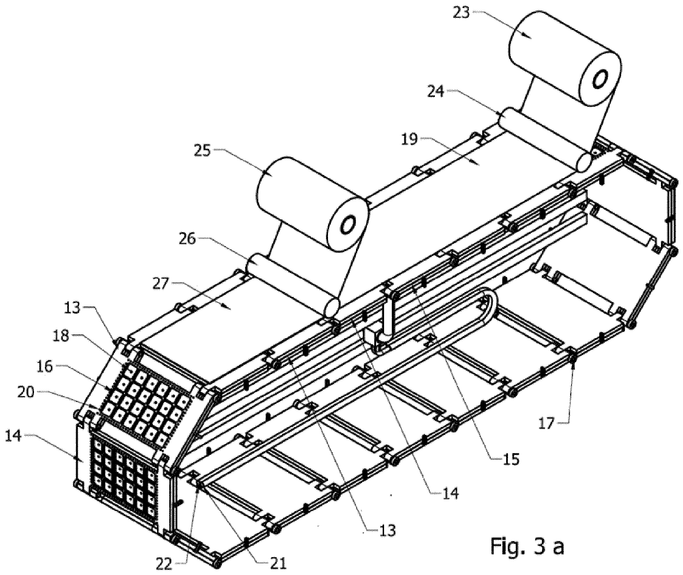

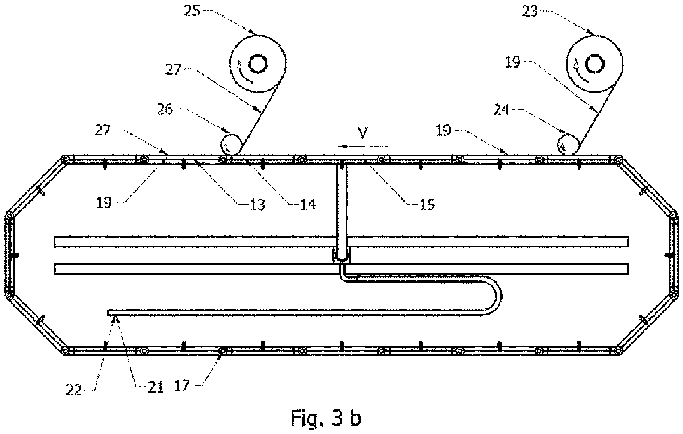

Both types of the above described machines must be provided with film feeding systems. A typical state of art solution of this kind is presented in figs. 3a and 3b. As it can be seen, the modular conveyor shown in these figures consists of a closed chain formed of modules 13, 14 and 15 containing cavities 16 connected with guide rollers 17 by means of pins. The modules 13 and 14 are practically identical, differing only by the number of connecting bearing sleeves. The module 15 is supplied with vacuum and compressed air transmitted through the connections between the modules 14 ,13 and further. The modules can also be mounted on driving chains forming an endless loop, without the use of pins. Each cavity has at least one opening 18 for the supply of vacuum during the thermoforming of the lower film 19 or compressed air during the removal of the finished products from the cavities. Figs. 3a and 3b also show a vacuum supply system 21 and a compressed air supply system 22. As shown, two rolls of the film are installed above the conveyor. The roll 23 supplies the lower film 19 and the roll 25 supplies the upper film 27. The modular conveyor can be a continuous or an intermittent device, as described above. The lower film 19 is sucked into the cavities by the vacuum supplied to the external openings 18. The moving conveyor draws the lower film 19 unrolling it from the roll 23. The roll 24 assists the introduction of the film onto the conveyor. The upper film 27 is being unrolled in a similar way. The two films are being sealed together after the upper film 27 has been pressed by means of a roll 26 against the lower film 19 located underneath. Typically, the roll 26 is heated and acts on both films as a sealing device. The rolls of the lower and upper films 23, 25 are usually driven rolls, and both films are passed through additional balancing rolls before reaching the rolls 24 and 26, to facilitate the unrolling process. The thermoforming of the lower film 19 and filling of cavities 16 takes place between the rolls 26 and 24. Downstream of the roll 26, after the two film layers have been sealed together, the individual products are cut out and removed from the cavities.

Document EP2933194 A1 discloses an apparatus for producing pouches filled with a composition. The disclosed apparatus includes a pouch making unit comprising a filing system to form pouches from a first film and a second film, the pouches being filled with a composition, and the first film being sealed with the second film. The pouch making unit comprises an endless rotating system such as a conveyor belt.

Document US6282866 B1 discloses a packaging machine comprising a transport path, a plurality of tray carriers for holding trays, said tray carriers being arranged in succession along said transport path from the input side to the output side, and drive means for advancing said tray carriers in an advancement plane, the drive means including a drive chain with a first chain strand. The disclosed machine further comprises feed means for feeding a cover film for covering the filled trays, the feed means including a second drive chain, the second chain strand being guided in a plane parallel to said first chain strand along a predetermined length parallel to said first chain strand.

All the above described known automatic film feeding systems have a very serious disadvantage. It is due to the fact that the films forming the packagings are fed in a direction along the conveyor belt o which the modules or trays are carried. As a consequence, if any defect appears even in a single module, e.g. faulty film forming, film breakage, faulty film sealing, lack or inappropriate metering of the packed substance - the machine must be stopped and the film containing already packed substance portions must be removed along its entire length. Very often, the length of the described machines exceeds 20 m. Therefore, every failure results in a loss of great quantities of raw materials.

Another very significant problem is the fact that an emergency stoppage of the machine, removal of the film, cleaning and relaunching the machine takes a long time, even up to one hour, which result in substantial production losses.

The aim of the invention was to eliminate the state of art problems described above by providing an improved film feeding system and a conveyor and machine equipped with such system.

According to the invention a film feeding system for a conveyor of a product packing machine is provided, the conveyor comprising a plurality of modules forming an endless chain moving intermittently along a longitudinal axis of the conveyor, the products being placed on the individual modules between a lower film and an upper film, the lower film and the upper film being sealed with each other. The system according to the invention comprises at least one lower film feeding assembly and at least one upper film feeding assembly, wherein the lower film feeding assembly comprises at least one roll for feeding the lower film, and the upper film feeding assembly comprises at least one roll for feeding the upper film.

The system according to the invention is characterized in that the direction of feeding the film into the modular conveyor in both film feeding assemblies is transversal to the longitudinal axis of the conveyor.

Preferably, each of the film feeding assemblies comprises two rolls, a first roll and a second roll located respectively opposite to one another on both sides of the conveyor.

Preferably, in each film feeding assembly the first roll and the second roll feed the film alternately.

Preferably, each film feeding assembly is equipped with a film feeder cooperating with at least one feeding roll, the feeder moving back and forth transversally to the longitudinal axis of the conveyor.

Each film feeding assembly preferably comprises the first feeding roll and the second feeding roll feeding the film alternately, and the feeder cooperates alternately with the first roll and the second roll.

Each roll preferably cooperates with a cutting device for cutting the film into the lengths adapted to be used for packing the products on one module.

The cutting device is preferably a knife.

According to the invention, a product packaging machine conveyor is provided, comprising a plurality of modules forming an endless chain moving intermittently along a longitudinal axis of the conveyor, the products being located in the individual modules between a lower film and an upper film, the lower film and the upper film being sealed with each other.

The conveyor according to the invention is characterized in that it is equipped with the film feeding system according to the invention.

According to the invention, also a product packaging machine is provided, the machine being equipped with a conveyor comprising a plurality of modules forming an endless chain moving intermittently along a longitudinal axis of the conveyor, the products being placed in the individual modules between a lower film and an upper film, the lower film and the upper film being sealed with each other, the conveyor being equipped with the film feeding system according to the invention.

The essence of the invention consists in feeding of appropriately measured lengths of the upper film and the lower film to the individual modules of the conveyor. In an emergency situation, once the machine has been stopped, it is enough to remove the film and the substance being packed from the modules affected by the situation. Usually a failure occurs only in one module because the machines are typically equipped with immediate error detection systems; upon detection of an error, the machine is automatically stopped and the location of the error is indicated. In such case, cleaning and relaunching of the machine takes no more than one minute and the losses of raw materials are reduced to minimum.

Embodiments of the invention are shown in the appended drawings, in which:
Fig. 4a shows a perspective view of the conveyor of the product packaging machine equipped with the system according to a first embodiment of the invention;
Fig. 4b shows an end view of the conveyor shown in fig. 4a;
Fig. 5 shows a perspective view of the conveyor of the product packaging machine equipped with the system according to a second embodiment of the invention.

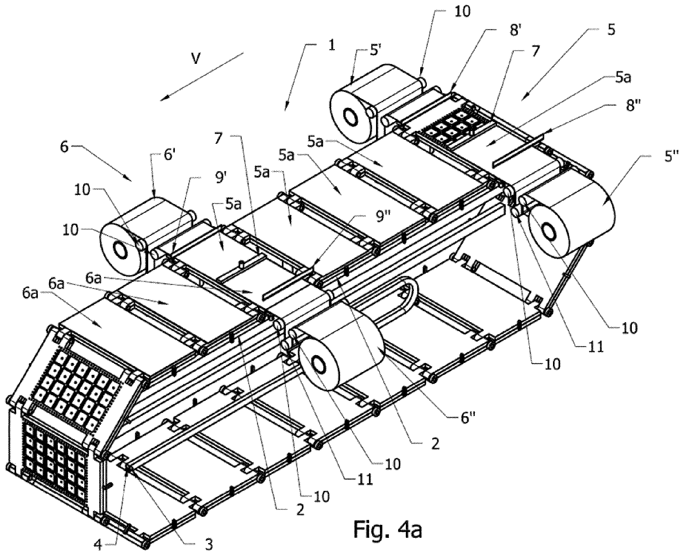

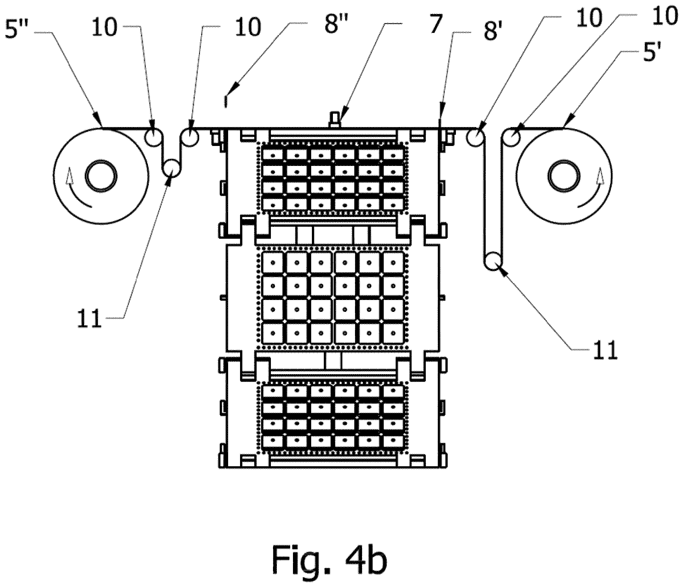

The system according to the invention may be used in the machines with intermittent motion conveyors. Fig. 4a and Fig. 4b present the conveyor of the machine according to the invention equipped with the system according to the first, most preferred embodiment of the invention.

The conveyor 1 shown in figures 4-5 is constructed similarly to the modular conveyor illustrated in figs. 3a of the conventional product packaging machines described above. The conveyor 1 comprises - like the known conveyors - a plurality of modules 2 and the systems supplying vacuum 3 and compressed air 4. The modules 2 comprise molds, in which the lower film is formed and the substances to be packed are inserted.

According to the invention, the conveyor is equipped with an innovative film feeding system comprising at least of one lower film feeding assembly 5 and at least one upper film feeding assembly 6. Each of the assemblies 5 and 6 comprises at least one roll. In the embodiment presented in figures 4a - 4d, the assembly 5 comprises two rolls 5' and 5", and the assembly 6 comprises two rolls 6' and 6". The conveyor 1 operates in intermittent movement mode as indicated in fig. 4a by the arrow V. The rolls 5', 5" and 6', 6" are identical and they are arranged in pairs vis-à-vis each other on the opposite sides of the conveyor 1.

During the operation of the machine, the lower film 5a is fed only from one roll at the same time - the roll 5' or the roll 5", and the upper film 6a is fed only from one roll at the same time - the roll 6' or the roll 6". When the stock of the film on any of the rolls has been exhausted, its respective opposite roll automatically starts to supply the film to the conveyor. Due to this arrangement, an operator is given sufficient time to replace the empty roll with a new roll. Both assemblies 5 and 6 operate in the same manner. Both the lower film 5a and the upper film 6a are supplied to the modular conveyor 1 transversally to the direction of movement of the conveyor.

Preferably, each assembly 5,6 of the system according to the invention is equipped with a film feeder 7 cooperating with at least one roll. In the example shown in fig. 4a and 4b, the feeder 7 cooperates alternately with one of the rolls, 5', 5" and 6', 6", respectively. Each film feeder 7 moves back and forth transversally to the longitudinal axis and the direction of movement of the conveyor 1. In both assemblies 5 and 6 the film is picked up by the feeder 7, e.g. through vacuum suction or by means of mechanical claps. The film feeding system is assisted by a system of directional rolls 10 and balancing rolls 11.

The film delivered by the rolls 5', 5", 6', 6" is cut each time when a module has been covered by the film. In the example described, each roll 5', 5", 6', 6" cooperates also with a separate knife 8', 8", 9', 9". The film may also be cut out by means of another appropriate method, e.g. a laser, a hot cutting tool or an ultrasonic tool.

In the situation presented in fig. 4a, the lower film 5a is fed from the roll 5". When the conveyor 1 is stopped, the film feeder 7 picks up the film 5a along its edge facing the roll 5" and draws it along the entire width of the module, after which the lower film 5a is sucked to the module and cut with the knife 8'. Afterwards, the conveyor 1 moves on along a distance necessary to apply another section of the film to another module. Then the feeder 7 returns to the opposite edge of the conveyor 1, picks up a the film and applies it to the next module, and so on.

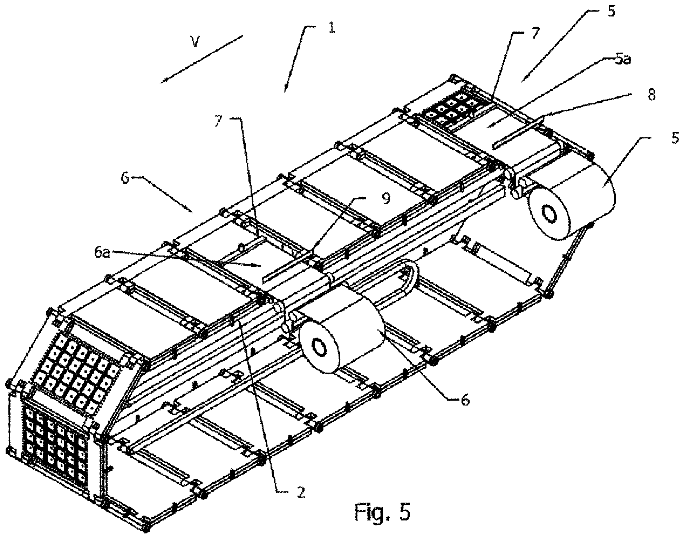

Between the assembly 5 for feeding the lower film 5a and the assembly 6 for feeding the upper film 6a, the thermoforming of the lower film 5a and the filling the molds with the products (substance or substances) takes place. In Figs. 4a and 5, these stages of the operation of the machine have been omitted for the sake of clarity; however, it should be understood that the modules reaching the assembly 6 have their molds already covered with the thermoformed lower film and filled with the products. The upper film 6a is sealed with the lower film 5a at the point of its delivery from the feeding assembly 6. Downstream of the assembly 6, where the two films 5a and 6a have been sealed together, individual final products are cut out and removed from the molds.

Fig. 5, analogical to fig. 4a, shows a perspective view of the conveyor of the machine equipped with the system according to the second embodiment of the invention. In this embodiment, each assembly comprises just one roll 5 or 6, and respectively one knife 8, 9 as well as - like in the first embodiment, the feeder 7. The lower film 5a and the upper film 6b are fed only on one side, so when a film roll has been emptied, the machine must stop and the film supply must be replenished. Nevertheless, a significant advantage of this solution lies in the fact that in an emergency situation, after stopping the machine, it is enough to remove the film and the substance being packed only from the affected modules.

## Claims

1. A film feeding system for a conveyor (1) of a product packing machine, in which the conveyor (1) comprises a plurality of modules (2) forming an endless chain moving intermittently along a longitudinal axis of conveyor (1) and the products are placed on the individual modules (2) between a lower film (5a) and an upper film (6a), the lower film (5a) and the upper film (6a) being sealed with each other and the film feeding system comprising at least one lower film feeding assembly (5) and at least one upper film feeding assembly (6), wherein the lower film feeding assembly (5) comprises at least one roll (5', 5") for feeding the lower film (5a), and the upper film feeding assembly (6) comprises at least one roll (6', 6") for feeding the upper film (6a), **characterized in that** the direction of feeding the film (5a, 6a) into the modular conveyor (1) in both film feeding assemblies (5, 6) is transversal to the longitudinal axis of the conveyor (1).

2. The system according to claim 1, **characterized in that** each of the film feeding assemblies (5,6) comprises two rolls (5', 5", 6', 6"), a first roll (5', 6') and a second roll (5", 6") located respectively opposite to one another on both sides of the conveyor (1).

3. The system according to claim 2, **characterized in that** in each film feeding assembly (5,6) the first roll (5', 6') and the second roll (5", 6") is adapted to feed the film alternately.

4. The system according to claim 1, **characterized in that** each film feeding assembly (5,6) is equipped with a film feeder (7) cooperating with at least one feeding roll (5', 5"; 6', 6"), the feeder (7) being adapted for moving back and forth transversally to the longitudinal axis of the conveyor (1).

5. The system according to claim 4, **characterized in that** each film feeding assembly (5,6) comprises the first and second feeding roll (5', 5"; 6', 6") for feeding the film alternately, and the feeder (7] is is adapted for cooperating alternately with the first roll (5', 6') and the second roll (5", 6").

6. The system according to claim 1, **characterized in that** each roll (5', 5"; 6', 6") is adapted for cooperating with a cutting device for cutting the film into the lengths adapted to be used for packing the products on one module (2).

7. The system according to claim 6, **characterized in that** the cutting device is a knife (8', 8"; 9', 9").

8. A product packaging machine conveyor (1) comprising a plurality of modules (2) forming an endless chain adapted for moving intermittently along a longitudinal axis of the conveyor (1), the products being located in the individual modules (2) between a lower film (5a) and an upper film (6a), the lower film (5a) and the upper film (6a) being sealed with each other, **characterized in that** the conveyor (1) is equipped with the film feeding system according to any of claims 1 to 7.

9. A product packaging machine provided with a conveyor (1) comprising a plurality of modules (2) forming an endless chain adapted for moving intermittently along a longitudinal axis of the conveyor (1), the products being placed in the individual modules (2) between a lower film (5a) and an upper film (6a), the lower film (5a) and the upper film (6a) being sealed with each other, **characterized in that** the conveyor (1) is equipped with the film feeding system according to any of claims 1 to 7.

## Patentansprüche

1. Folienzuführsystem für einen Förderer (1) einer Produktverpackungsmaschine, bei dem der Förderer (1) eine Vielzahl von Modulen (2) umfasst, die eine Endloskette bilden, die sich intermittierend entlang einer Längsachse des Förderers (1) bewegt, und die Produkte auf den einzelnen Modulen (2) zwischen einer unteren Folie (5a) und einer oberen Folie (6a) platziert werden, wobei die untere Folie (5a) und die obere Folie (6a) miteinander versiegelt sind, **dadurch gekennzeichnet, dass** sie mindestens eine untere Folienzuführungsbaugruppe (5) und mindestens eine obere Folienzuführungsbaugruppe (6) umfasst, wobei die untere Folienzuführungsbaugruppe (5) mindestens eine Rolle (5', 5") zum Zuführen der unteren Folie (5a) umfasst und die obere Folienzuführungsbaugruppe (6) mindestens eine Rolle (6', 6") zum Zuführen der oberen Folie (6a) umfasst, wobei die Richtung des Zuführens der Folie (5a, 6a) in beiden Folienzuführungsbaugruppen (5, 6) quer zur Längsachse des Förderers (1) verläuft.

2. System nach Anspruch 1, **dadurch gekennzeichnet, dass** jede der Filmzuführungsbaugruppen (5, 6) zwei Rollen (5', 5", 6', 6") umfasst, eine erste Rolle (5', 6') und eine zweite Rolle (5", 6"), die jeweils einander gegenüberliegend auf beiden Seiten des Förderers (1) angeordnet sind.

3. System nach Anspruch 2, **dadurch gekennzeichnet, dass** in jeder Filmzuführungsbaugruppe (5, 6) die erste Rolle (5', 6') und die zweite Rolle (5", 6") angepasst sind, den Film abwechselnd zuzuführen.

4. System nach Anspruch 1, **dadurch gekennzeichnet, dass** jede Folienzuführungsbaugruppe (5, 6) mit einer Folienzuführungsvorrichtung (7) ausgestattet ist, die mit mindestens einer Zuführungsrolle (5', 5"; 6', 6") zusammenwirkt, wobei die Zuführungsvorrichtung (7) für eine Hin- und Herbewegung quer zur Längsachse des Förderers (1) ausgelegt ist.

5. System nach Anspruch 4, **dadurch gekennzeichnet, dass** jede Filmzuführungsbaugruppe (5, 6) die erste und zweite Zuführungsrolle (5', 5"; 6', 6") zum abwechselnden Zuführen des Films umfasst und die Zuführungsvorrichtung (7) zum abwechselnden Zusammenwirken mit der ersten Rolle (5', 6') und der zweiten Rolle (5", 6") ausgebildet ist.

6. System nach Anspruch 1, **dadurch gekennzeichnet, dass** jede Rolle (5', 5"; 6', 6") zum Zusammenwirken mit einer Schneidevorrichtung zum Schneiden der Folie in die Längen, die zum Verpacken der Produkte auf einem Modul (2) verwendet werden können, geeignet ist.

7. System nach Anspruch 6, **dadurch gekennzeichnet, dass** die Schneidvorrichtung ein Messer (8', 8"; 9', 9") ist.

8. Förderer (1) für eine Produktverpackungsmaschine mit einer Vielzahl von Modulen (2), die eine Endloskette bilden, die sich intermittierend entlang einer Längsachse des Förderers (1) bewegen kann, wobei die Produkte in den einzelnen Modulen (2) zwischen einer unteren Folie (5a) und einer oberen Folie (6a) angeordnet sind, wobei die untere Folie (5a) und die obere Folie (6a) miteinander versiegelt sind, **dadurch gekennzeichnet, dass** der Förderer (1) mit dem Folienzuführsystem nach einem der Ansprüche 1 bis 7 ausgestattet ist.

9. Produktverpackungsmaschine, die mit einem Förderer (1) versehen ist, der eine Vielzahl von Modulen (2) umfasst, die eine Endloskette bilden, die sich intermittierend entlang einer Längsachse des Förderers (1) bewegt, wobei die Produkte in den einzelnen Modulen (2) zwischen einer unteren Folie (5a) und einer oberen Folie (6a) platziert werden, wobei die untere Folie (5a) und die obere Folie (6a) miteinander versiegelt sind, **dadurch gekennzeichnet, dass** der Förderer (1) mit dem Folienzuführsystem nach einem der Ansprüche 1 bis 7 ausgestattet ist.

## Revendications

1. Un système d'alimentation en film pour un convoyeur (1) d'une machine d'emballage de produits, dans lequel le convoyeur (1) comprend une pluralité de modules (2) formant une chaîne sans fin se déplaçant par intermittence le long d'un axe longitudinal du convoyeur (1) et les produits sont placés sur les modules individuels (2) entre un film inférieur (5a) et un film supérieur (6a), le film inférieur (5a) et le film supérieur (6a) étant scellés l'un à l'autre, **caractérisé en ce qu'il** comprend au moins un ensemble d'alimentation en film inférieur (5) et au moins un ensemble d'alimentation en film supérieur (6), dans lequel l'ensemble d'alimentation en film inférieur (5) comprend au moins un rouleau (5', 5") pour alimenter le film inférieur (5a), et l'ensemble d'alimentation de film supérieur (6) comprend au moins un rouleau (6', 6") pour alimenter le film supérieur (6a), la direction d'alimentation du film (5a, 6a) dans les deux ensembles d'alimentation en film (5, 6) étant transversale à l'axe longitudinal du convoyeur (1).

2. Le système selon la revendication 1, **caractérisé en ce que** chacun des ensembles d'alimentation en film (5, 6) comprend deux rouleaux (5', 5", 6', 6"), un premier rouleau (5', 6') et un second rouleau (5", 6") situés respectivement en face l'un de l'autre de part et d'autre du convoyeur (1).

3. Le système selon la revendication 2, **caractérisé en ce que** dans chaque ensemble d'alimentation en film (5, 6), le premier rouleau (5', 6') et le second rouleau (5", 6") sont adaptés pour alimenter le film en alternance.

4. Le système selon la revendication 1, **caractérisé en ce que** chaque ensemble d'alimentation en film (5, 6) est équipé d'un dispositif d'alimentation en film (7) coopérant avec au moins un rouleau d'alimentation (5', 5"; 6', 6"), le dispositif d'alimentation (7) étant adapté pour se déplacer d'avant en arrière transversalement à l'axe longitudinal du convoyeur (1).

5. Le système selon la revendication 4, **caractérisé en ce que** chaque ensemble d'alimentation en film (5, 6) comprend le premier et le second rouleau d'alimentation (5', 5"; 6', 6") pour alimenter le film en alternance, et le dispositif d'alimentation (7) est adapté pour coopérer en alternance avec le premier rouleau (5', 6') et le second rouleau (5", 6").

6. Le système selon la revendication 1, **caractérisé en ce que** chaque rouleau (5', 5"; 6', 6") est adapté pour coopérer avec un dispositif de coupe pour couper le film en longueurs adaptées pour être utilisées pour emballer les produits sur un module (2).

7. Le système selon la revendication 6, **caractérisé en ce que** le dispositif de coupe est un couteau (8', 8"; 9', 9").

8. Un convoyeur de machine d'emballage de produits (1) comprenant une pluralité de modules (2) formant une chaîne sans fin adaptée pour se déplacer par intermittence le long d'un axe longitudinal du convoyeur (1), les produits étant situés dans les modules individuels (2) entre un film inférieur (5a) et un film supérieur (6a), le film inférieur (5a) et le film supérieur (6a) étant scellés l'un à l'autre, **caractérisé en ce que** le convoyeur (1) est équipé du système d'alimentation en film selon l'une quelconque des revendications 1 à 7.

9. Une machine d'emballage de produits équipée d'un convoyeur (1) comprenant une pluralité de modules (2) formant une chaîne sans fin adaptée pour se déplacer par intermittence le long d'un axe longitudinal du convoyeur (1), les produits étant placés dans les modules individuels (2) entre un film inférieur (5a) et un film supérieur (6a), le film inférieur (5a) et le film supérieur (6a) étant scellés l'un à l'autre, **caractérisée en ce que** le convoyeur (1) est équipé du système d'alimentation en film selon l'une quelconque des revendications 1 à 7.
